# EUROPEAN PATENT SPECIFICATION

(11) **EP 2 396 164 B1**
(45) Date of publication and mention of the grant of the patent: **11.03.2015**
(21) Application number: 10704349.9
(22) Date of filing: 10.02.2010
(51) Int. Cl.: B29C 70/46, B29C 70/54, B29C 33/48

(54) **METHOD FOR PRODUCING PARTS OF FIBER REINFORCED PLASTICS**
VERFAHREN ZUR HERSTELLUNG VON FASERVERSTÄRKTEN TEILEN
PROCÉDÉ POUR LA FABRICATION DES PIÈCES RENFORCÉES PAR DES FIBRES

(30) Priority: 12.02.2009 US 151985 P
(43) Date of publication of application: 21.12.2011
(73) Proprietor: Kringlan Composites AG, 8112 Otelfingen (CH)
(72) Inventor: PINI, Niccolò, CH-8046 Zürich (CH); BECK, Sebastian, CH-8050 Zürich (CH); BRAUN, Christian, CH-8032 Zürich (CH); EHRLER, Bruno, CH-6405 Immensee (CH)
(74) Representative: Irniger, Ernst
(86) International application number: PCT/EP2010/051647
(87) International publication number: WO 2010/092081

(56) References cited:
- DE-A1- 2 110 508
- DE-A1- 4 234 002
- FR-A1- 2 401 007
- GB-A- 1 292 929
- US-A- 2 381 395
- US-A1- 2006 113 708

## Description

### Technical Field

The invention relates to the manufacture of parts made of fiber-reinforced plastics. It relates to methods and apparatuses according to the opening clauses of the claims. The invention can be applied in the field of manufacturing rims or wheels for vehicles, or in the field of aircraft production in the production of stringers used for reinforcing the fuselage. In electrical industry, the invention may be applied for the production of glassfiber reinforced insulators from thermoplastic glassfiber prepregs.

### Background of the Invention

The automotive industry has a continuous demand for very lightweight parts and parts having a good fracture behaviour combined with a high stiffness and strength. This applies, e.g., to wheels and rims. Several ways of manufacturing rims or portions thereof are known in the art.

DE 101 45 630 A1 discloses a wheel made of fiber-reinforced plastics in which the major portion of fiber strands are oriented in circumferential direction in the rim and in radial direction in the wheel spider. This is achieved, e.g., through winding of unidirectional endless fibers. This makes it difficult to implement the production method in an industrial field, in particular in case of complex part geometries.

In DE 43 35 062 A1, a method for the production of curved fiber-reinforced thermoplastic profiles is proposed. Thermoplastic pre-impregnated fibers (commonly referred to as thermoplastic "prepregs") are heated while exposed to pressure in a forming tool. The so-shaped prepreg profile is cooled after the shaping process. Subsequently, the prepreg profile is pushed in a gliding manner through a slot between two essentially fixed tool pieces. This way, the prepreg profile is again exerted to pressure, namely to the pressure resulting from the gliding interaction with the tool pieces. The profile thereby basically adopts the cross section of the slot between the fixed tool pieces and the curvature of the curved tool pieces. A drawback of this method is that the thermoplastic profile is treated while it is moving: The layers of the prepregs may slip or bend or displace during the treatment, thus compromising the final product. Applying this method, it is furthermore difficult to keep temperatures and pressures approximately constant. Furthermore, parts of certain shapes such as ring-like parts cannot be manufactured by this method.

In EP 842 757 B1, a method for producing a preformed component (preform) of a composite material is disclosed. A fibrous pre-assembly, namely a cloth having fibres in pre-defined orientations, is used. The deformable mesh of the cloth is placed on a preforming matrix or former and then wound around this former to a depth of several layers. The winding is fixed on a larger diameter of the former, such that the fibers are orientated in a prescribed manner. The so-obtained preform can have a ring-like shape. The preform can be put into a mold, and then, a resin can be transferred through the preform under vacuum and/or with a transfer pressure, and finally, the resin can be crosslinked at a suitable temperature. The injection of a thermoplastic resin is expected to be impossible or at least very problematic due to the high viscosity of thermoplastic materials.

GB 2 010 155 A discloses a method of manufacturing seamless metallic wheel rims. The desired cross section of the rim is impressed onto a basic ring-shaped piece of metal by two profiled circular molds. This method is not readily applicable to fiber composite material since the shaping mechanisms occurring in metals do not occur in materials containing fibers.

In WO 2008 040405 A1, a process for producing seamless ring-shaped structures made of thermoplastic composite materials is described. This rather simple process is based on inserting an annular preform made of several layers of a thermoplastic composite prepreg-material between an inner and an outer ring-shaped mold. At least one of the two mentioned molds rotates such that it locally exerts a pressure on a portion of the preform, wherin the preform is heated up to a process temperature at least in the region where the pressure is applied. Apparently, problems occur when trying to automate this dynamic process. Furthermore, realizing a constant process temperature distribution while applying an appropriate pressure in order to avoid slip or overlap effects of the layers of the prepreg material of the preform is rather difficult. Even with optimized process parameters such as temperature and pressure, the repeatability and quality required for industrial scale application is hard or impossible to assure, since a constant application of these parameters throughout the process is apparently impossible to achieve in industrial production.

In US 2006/0113708, a method for moulding a vulcanised rubber tread belt with an approximate diameter of 1.3 meters-3.7 meters for large earthmoving vehicles is described. Leader and follower mould segments are levered outwards by an actuating ring to compress the tread belt against outer segments which are themselves cammed inwards by means of the actuating ring. The tread belt is then cured in the mould. This arrangement does not appear to be suited for smaller-scale components, nor for processing reinforced plastics.

DE 42 34 002 discloses a method and device for producing fibre-reinforced open U-profiles by pressing a wedge-shaped former between a pair of segments so as to force them upwards and outwards and thereby compress a preform against an outer mould. The geometry of the forming device is such that it appears only suitable for producing U-profiles with relatively long length perpendicular to the plane of the U.

### Summary of the Invention

One object of the invention is to create a method for manufacturing parts that does not show the disadvantages or problems mentioned above. Another object of the invention is to provide a possibility to produce parts, in particular lightweight parts with superior mechanical properties, in particular parts having a good fracture behaviour and/or a high stiffness and/or a high strength.

An object of the invention is to provide a possibility to produce parts of reinforced plastics.

Another object of the invention is to provide a possibility to provide large process windows when producing parts, in particular parts of reinforced plastics, more particularly parts of reinforced thermoplastics.

Another object of the invention is to provide a possibility to produce parts showing a particularly safe behavior in case of abrupt rupture.

Another object of the invention is to provide a possibility to produce parts showing an improved failure behaviour.

Another object of the invention is to provide a possibility to provide an improved cycle time for producing parts.

Another object of the invention is to provide a possibility to produce parts having special shapes or geometries, in particular annular or ring-like shapes or similar shapes.

Another object of the invention is to provide a possibility to produce seamless parts, in particular seamless ring-like shaped parts.

Another object of the invention is to provide a possibility to produce parts having improved insulation properties, in particular thermal and/or electrical insulation, and/or parts showing an improved chemical inertness or resistance. Another object of the invention is to provide a possibility to more easily produce parts, in particular parts substantially made of reinforced plastics.

Another object of the invention is to provide an improved possibility to produce parts substantially made of reinforced thermoplastic, in particular of glassfiber-reinforced thermoplastic or carbonfiber reinforced thermoplastic.

An object of the invention is to provide an improved possibility to produce rims or wheels or portions thereof.

Another object of the invention is to provide an improved possibility to produce insulators, in particular reinforced insulators.

An object of the invention is to provide an improved possibility to produce stringers for use in airplanes as reinforcing elements of the fuselage.

Further objects emerge from the description and embodiments below.

At least one of these objects is at least partially achieved by apparatuses and methods according to the patent claims.

The method for manufacturing parts according to claim 1 comprises the steps of
a) providing material;
b) providing a first tool comprising at least one set comprising at least one segment;
c) providing a second tool comprising at least one first and at least one second set of at least one segment each, said segments, when arranged next to each other in a predefined way, referred to as closed position, form a second-tool surface describing the shape of a portion of a surface of said part to be manufactured;
d) moving the at least one segments of said first set of said second tool into said closed position;
e) moving the at least one segments of said second set of said second tool towards and into said closed position;
f) compressing between at least said first and second tools at least a portion of said material, in particular at least substantially all of said material, by applying pressure to at least one of said first and second tools;
wherein said segments of said second tool are moved such that continually during moving of the at least one segments of said second set of said second tool towards said closed position, a momentary travel distance up to said closed position for the at least one segments of said second set of said second tool exceeds a momentary travel distance up to said closed position for the at least one segments of said first set of said second tool.

Said first and second tools can also be considered and, accordingly, can be referred to as first and second pressing tools or first and second molds. The method is a method for manufacturing parts of fiber-reinforced plastics, in particular of fiber-reinforced thermoplastics.

In one embodiment which may be combined with the before-addressed embodiment, said method is a method for industrially producing said parts.

In one embodiment which may be combined with one or more of the before-addressed embodiments, said material comprises a resin, and said compressing is carried out for promoting a cross-linking of the resin.

In one embodiment which may be combined with one or more of the before-addressed embodiments, said parts are finished products or intermediate products to be subjected to one or more finishing manufacturing steps.

In one embodiment which may be combined with one or more of the before-addressed embodiments, said method is a method for manufacturing seamless parts.

In one embodiment which may be combined with one or more of the before-addressed embodiments, the segments are moved along a predefined way or path.

In one embodiment which may be combined with one or more of the before-addressed embodiments, said segments of said first and second tools, when arranged in a predefined way, referred to as closed position, form a tool surface describing the shape of a portion of a surface of said part to be manufactured; in particular, wherein said segments of said first and second tools, when arranged in a predefined way, referred to as closed position, form a tool surface substantially describing the shape of the complete surface of said part to be manufactured.

In one embodiment which may be combined with one or more of the before-addressed embodiments, step f) is carried out for forming said material (or a portion thereof) in a desired shape; the pressure applied to the material is also referred to as forming pressure.

In one embodiment which may be combined with one or more of the before-addressed embodiments, the applied pressure mentionend in step f) causes a moving relatively to each other at least of the segments of said first tool with respect to segments of said second tool.

In fact, one can in some embodiments distinguish two phases during the compressing in step f): A compressing of the material before the closed position of all tools is reached; in this phase, at least the segments of said second set are moved; this phase can be helpful for removing from the material gases (typically air) inside the material. And a compressing while the segments of the first set and the segments of the second set of the second tool are already in the closed position; during this phase, there is no relative movement anymore of segments of said first set with respect to the segments of the second set.

In one embodiment which may be combined with one or more of the before-addressed embodiments, in step d) the at least one segments of said first set of said second tool are moved from an initial position towards and into said closed position.

In one embodiment which may be combined with the before-addressed embodiment, at least one of said segments of said second set of said second tool is, when said second tool is in said closed position, arranged between more than one neighboring segments of said first set of said second tool, and an opening between said more than one neighboring segments of said first set of said second tool is, from said initial position up to an intermediate position reached by the first set before reaching said closed position, too small for said at least one of said segments of said second set of said second tool to penetrate on its way towards said closed position.

In one embodiment which may be combined with one or more of the before-addressed embodiments, the direction of pressure applied to a segment of said second tool at least substantially coincides with the direction of the moving of the respective segment mentioned in step d) and e), respectively, at least when close to said closed position. In particular, wherein said moving mentioned in step d) and e), respectively, is accomplished at least substantially along a straight line, and wherein said direction of pressure at least substantially coincides with the respective direction of the moving.

In one embodiment which may be combined with one or more of the before-addressed embodiments, said parts are predominantly, in particularly substantially, continuous-fiber reinforced parts (and said material correspondingly comprises continuous-fiber reinforced plastics). Parts reinforced with such substantially uninterrupted fibers have extraordinary properties.

In one embodiment which may be combined with one or more of the before-addressed embodiments, said parts comprise fibers which are predominantly, in particularly substantially, oriented fibers (and said material correspondingly comprises oriented fibers). Parts reinforced in such a way can have extraordinary properties. The orientation of the fibers is selected according to desired properties of the part to be manufactured. E.g., calculations / simulations can be carried out for finding an optimum fiber orientation. Usually, there are comprised in the material several layers one or more of which will have the same and one or more of which will have a different fiber orientation.

Said parts are either rims or wheels or portions thereof, insulators, in particular reinforced insulators, in particular substantially cylindrically-shaped insulators, or stringers used in airplanes as reinforcing elements of the fuselage.

In one embodiment which may be combined with one or more of the before-addressed embodiments, said first set of said second tool is brought into contact with said material before said second set of said second tool is brought into contact with said material. In particular, pressure is applied to said material by said second set of said second tool only after pressure has been applied to said material by said first set of said second tool. And more particularly, said first and second sets of said second tool are structured and arranged and moved in such a way that whenever pressure is applied to said material by said second set of said second tool, pressure is also applied to said material by said first set of said second tool.

In one embodiment which may be combined with one or more of the before-addressed embodiments, said first tool is an outer tool and said second set is an inner tool, or vice versa, in particular wherein the inner tool is, during said moving steps, located generally inside a shape generally described by said outer tool.

Usually, said first tool, more particularly its segments, are kept in position during the movements of the sets of the second tool. This can be accomplished by applying corresponding forces to the segments of said first tool and/or by fixing the segments of the first tool with respect to one another. Particularly interesting is the case that the first tool is the outer tool and the second tool is the inner tool. In this case, fibers, in particular continuous fibers comprised in the material will, at least predominantly, be stretched during the described compressing action, which usually leads to particularly advantageous material properties.

In one embodiment which may be combined with one or more of the before-addressed embodiments, at least one of (in particular each of) said sets of segments comprises at least two, in particular at least three, more particularly at least four segments.

In one embodiment which may be combined with one or more of the before-addressed embodiments, the method comprises moving all segments of one of said sets (be it a set of said first tool or a set of said second tool) at least substantially simultaneously during said compressing, in particular wherein this applies to each of the sets of an inner tool or to each of the sets. In particular wherein for said moving of all segments of said one of said sets is driven by one and the same drive.

In one embodiment which may be combined with one or more of the before-addressed embodiments, the method comprises moving all segments of one of said sets (be it a set of said first tool or a set of said second tool) at substantially the same speed during said compressing, in particular wherein this applies to each of the sets of an inner tool or to each of the sets.

In one embodiment which may be combined with one or more of the before-addressed embodiments, said material is provided, in particular inserted between said first and second tools, substantially in form of foils or sheets or stripes.

Said material as well as said part comprise or are at least substantially made of fiber reinforced plastics.

In one embodiment which may be combined with one or more of the before-addressed embodiments, said material inserted between said first and second tools comprises a thermoplastic. Thermoplastics enable a more rapid production (shorter production cycle time), they have a high fracture toughness and a good recycleability and some show a high temperature resistance.

In one embodiment which may be combined with one or more of the before-addressed embodiments, said material substantially is a preform or a prepreg material.

In one embodiment which may be combined with one or more of the before-addressed embodiments, said material is inserted manually between said first and said second tools.

In one embodiment which may be combined with one or more of the before-addressed embodiments except for the beforementioned embodiment, said material is inserted automatically between said first and said second tools, in particular by a robot.

In one embodiment which may be combined with one or more of the before-addressed embodiments, the method comprises heating said material before said compressing, and in particular after inserting the material between said first and said second tools. For thermoplastics, heating is important, whereas in case thermosets and elastomeres, it can be possible to dispense with heating.

In one embodiment which may be combined with one or more of the before-addressed embodiments, the method comprises heating said material during said compressing.

In one embodiment which may be combined with one or more of the before-addressed embodiments, the method comprises monitoring, in particular controlling the temperature of said material, in particular before and/or during said compressing.

In one embodiment which may be combined with one or more of the before-addressed embodiments, said parts comprise a portion describing
- a substantially closed-shape; or
- a nearly closed-shape; or
- an open shape having a generally or at least partially concave inner side and a generally or at least partially convex outer side;
or wherein said parts substantially describe
- a substantially closed-shape; or
- a nearly closed-shape; or
- an open shape having a generally or at least partially concave inner side and a generally or at least partially convex outer side.

In one embodiment which may be combined with one or more of the before-addressed embodiments, said parts comprise a portion having a substantially ring-shaped or ring-like structure, or wherein said parts substantially have a ring-shaped or ring-like structure.

Such kinds of parts are difficult to produce otherwise, in particular when the material substantially is reinforced thermoplastics, in particular thermoplastics reinforced with fibers, in particular reinforced with continuous fibers.

In one embodiment which may be combined with one or more of the before-addressed embodiments, said parts comprise a portion having a substantially annular shape, or wherein said parts substantially have an annular shape.

In one embodiment which may be combined with one or more of the before-addressed embodiments, during said compressing said material, an area of said material which is in contact with said first set of said second tool is larger than, in particular is at least two times, more particularly at least three times as large as the area of said material which is in contact with said second set of said second tool.

In one embodiment which may be combined with one or more of the before-addressed embodiments, said first and second tools are tools the shape of which determines the shape of said parts, in particular wherein the shape of said first and second tools are tools describing, when they are arranged in a predefined way referred to as closed position), a shape corresponding to the shape of the part to be produced.

In one embodiment which may be combined with one or more of the before-addressed embodiments, the tools form, when arranged in a predefined way, a cavity corresponding at least substantially to the shape of said part to be manufactured.

In one embodiment which may be combined with one or more of the before-addressed embodiments, for said first set of said second tool and/or for said second set of said second tool, the segments of the respective set are moved such that a pressure onto said material to be compressed exerted by one of the segments of said respective set is at least approximately the same for each of said segments.

In one embodiment which may be combined with one or more of the before-addressed embodiments, at least one of said segments of said second set of said second tool is tapered in the direction of the movement of said segment. In particular, each of said segments of said second set of said first tool is tapered in the direction of the movement of respective segment.

In one embodiment which may be combined with one or more of the before-addressed embodiments, at least one of said segments of said second set of said second tool is shaped such that when compressing said material, forces are exerted by said segment onto at least one segment of said first set of said second tool. In particular, wherein each of said segments of said second set of said second tool is shaped such that when compressing said material by moving said segments, forces are exerted by said segments onto at least one segment of said first set of said second tool, in particular onto each segment of said first set of said second tool.

In one embodiment referring to the before-addressed embodiment, said exerted force is transferred from said segment or from said segments onto said at least one segment of said first set of said second tool or onto each segement of said first set of said second tool via - in particular substantially solely via - at least one contact surface of said segment or segments interacting with at least one contact surface of said at least one segment of said first set of said second tool or interacting with contact surfaces of said segments of said first set of said second tool. In particular, such interacting contact surfaces are mating surfaces.

In one embodiment referring to the last-mentioned or to the before-last mentioned embodiment, said exerted forces are directed substantially in the direction of said movement of said segment or nearly perpendicularly thereto or a superposition of such forces.

In one embodiment which may be combined with one or more of the before-addressed embodiments, by said compressing, a pressure of at least 5 bar and in particular of at most 50 bar is exerted on said material. More particularly, a pressure of between 10 and 30 bar is exerted on said material by the segments of the tools.

In one embodiment which may be combined with one or more of the before-addressed embodiments, the method comprises the step of heating said material before and/or during and/or after said compressing, in particular heating at least substantially all of the material inserted between said first and second tool. In particular, namely most prominently in case of (reinforced) thermosets, said material comprises a resin, and said heating is carried out for promoting a cross-linking of the resin. In case of (reinforced) thermoplastics, said heating brings the thermoplastic into a well-formable state.

The apparatus for manufacturing parts (in particular of parts substantially made of reinforced plastics) comprises
- a first tool and a second tool, said first tool comprising at least one set comprising at least one (in particular at least two) segments, and said second tool comprising at least one first and one second set of at least one (in particular at least two) segment each;
- a drive unit for driving at least said first set and said second set of said second tool.

Such an apparatus can allow to carry out the above-described methods.

In one embodiment, said drive unit is a drive unit for driving at least said first set and said second set of said second tool towards said first tool; in particular, said drive is structured and configured for said driving.

In one embodiment of the apparatus which may be combined with one or more of the before-addressed embodiments, the segments of said first tool are shaped such that, when arranged in a predefined way referred to as closed position, they form a an at least substantially continuous surface corresponding to a first partial surface of a part to be manufactured, and wherein the segments of said second tool are shaped such that, when arranged in a predefined way referred to as closed position, they form an at least substantially continuous surface corresponding to a second partial surface of said part to be manufactured, in particular wherein these two partial surfaces complement each other such that they form substantially the whole surface of said part to be manufactured.

In one embodiment of the apparatus which may be combined with one or more of the before-addressed embodiments, the segments of said first tool are shaped such that, when arranged in a predefined way, they form a continuous surface, and the segments of said second tool are shaped such that, when arranged in a predefined way, they form another continuous surface, and wherein these two continuous surfaces complement each other such that they form substantially the whole surface of a pre-defined volume when arranged with respect to each other in a predefined way.

In one embodiment of the apparatus referring to one or both of the two last-addressed embodiments, said at least one segments of said first set of said second tool comprise at least one mating surface each, mating, when said second tool is in said closed position, with at least one mating surface of said at least one segment of said second set of said second tool, wherein the mating surfaces of said first set of said second tool each form, in said closed position, an acute angle with said second partial surface.

In one embodiment which may be combined with one or more of the before-addressed embodiments, said apparatus comprises a control unit configured to control a movement of said first and of said second set of said second tool in such a way that said segments of said second tool are moved such that continually during moving the at least one segments of said second set of said second tool towards said closed position, a momentary travel distance up to said closed position for the at least one segments of said second set of said second tool exceeds a momentary travel distance up to said closed position for the at least one segments of said first set of said second tool. In particular, the control unit controls said drive unit in the described way.

In one embodiment which may be combined with one or more of the before-addressed embodiments, said apparatus comprises a temperature change unit structured and configured for heating or cooling or for both, heating and cooling, material inserted between said first and second tools. In particular, at least a portion of said temperature change unit is integrated in at least one of said tools.

The invention comprises apparatuses with features of corresponding methods according to the invention, and vice versa.

The advantages of the apparatuses basically correspond to the advantages of corresponding methods and vice versa.

In one aspect of the invention, the method for manufacturing parts comprises the steps of
- inserting material between a first tool and a second tool, said first tool comprising at least one set
   - comprising at least two segments, in particular wherein said segments are separable from each other, and said second tool comprising at least one first and one second set of at least one segment each, in
   particular wherein said segments are separable from each other;
- compressing at least a portion of said material, in particular at least substantially all of said material, by
   o moving at least said first set of said second tool towards said first tool; and then
   o moving at least said second set of said second tool towards said first tool.

The subsequent movements of said first set of said second tool and said second set of said second tool (which movements are typically carried out exerting pressures of at least 5 bar) makes it possible to form ring-shaped and ring-like shaped parts from preforms such as prepreg material. It is possible to apply pressures very homogeneously to the material.

In one embodiment of this aspect, said moving at least said first set of said second tool towards said first tool takes place still (i.e. continuedly) or again (i.e. renewedly) during said moving at least said second set of said second tool towards said first tool.

This aspect may be combined, as far as principally compatible, with any other herein disclosed embodiment and with any feature of any other herein disclosed embodiment.

Further embodiments and advantages emerge from the dependent claims and the figures.

### Brief Description of the Drawings

Below, the invention is described in more detail by means of examples and the included drawings. The figures show schematically:
- Fig. 1: a top view onto a detail of an apparatus with inserted preform, while first tool (outer tool) and second tool (inner tool) are in closed position;
- Fig. 2: a top view onto a detail of an apparatus, with inserted preform and open tools;
- Fig. 3: a top view onto a detail of an apparatus, with inserted preform and closed outer tool;
- Fig. 4: a top view onto a detail of an apparatus, with inserted preform and closed outer tool secured with clamps;
- Fig. 5: an illustrative cross-section-like side view of a detail of an apparatus with inserted preform, while rods of a first set of pull rods are being connected;
- Fig. 6: an illustrative cross-section-like side view of a detail of an apparatus with inserted preform, while rods of a first set of pull rods are connected and in action exerting forces on segments of the first set of the inner tool;
- Fig. 7: a top view onto a detail of an apparatus with inserted preform, while rods of a first set of pull rods are connected and in action exerting force on segments of the first set of the inner tool, and segments of the second set of the inner tool are also shown;
- Fig. 8: an illustrative cross-section-like side view of a detail of an apparatus with inserted preform and displacing mechanism, while segments of a second set of the inner tool are moving into the preform;
- Fig. 9: an illustrative cross-section-like side view of a detail of an apparatus with inserted preform and displacing mechanism, while segments of the second set of the inner tool have been moved into the preform, and rods of a second set of pull rods are being connected;
- Fig. 10: an illustrative cross-section-like side view of a detail of an apparatus with inserted preform, while segments of the second set of the inner tool have been moved into the preform, and rods of a second set of pull rods are being connected;
- Fig. 11: an illustrative cross-section-like side view of a detail of an apparatus with inserted preform, while segments of the second set of the inner tool have been moved into the preform, and rods of a second set of pull rods are connected and in action exerting forces on segments of the second set of the inner tool;
- Fig. 12: a top view onto a detail of an apparatus with inserted preform, while rods of the first set of pull rods are connected and in action exerting forces on segments of the first set of the inner tool, and rods of the second set of pull rods are connected and in action exerting forces on segments of the second set of the inner tool;
- Fig. 13: a top view onto the inner tool in closed position;
- Fig. 14: a top view onto the inner tool in closed position, with forces applied;
- Fig. 15: a top view onto a detail of an apparatus, while segments of the second set of the inner tool are being released;
- Fig. 16: an illustrative cross-section-like side view of a detail of an apparatus with displacing mechanism, while segments of the second set of the inner tool have been released and pull rods of the second set of pull rods are being disconnected;
- Fig. 17: an illustrative cross-section-like side view of a detail of an apparatus with displacing mechanism, while the pull rods of the second set of pull rods have been disconnected and the segments of the second set of the outer tool have been moved away;
- Fig. 18: a top view onto a detail of an apparatus, while the segments of the second set of the outer tool have been moved away, and the segments of the second set of the inner tool are released by moving the rods of the first set of pull rods;
- Fig. 19: a top view onto a detail of an apparatus, while the segments of the set of the outer tool have been moved away after the clamps have been released;
- Fig. 20: a very schematic illustration of various cross-sections perpendicular to a part axis, namely closed shapes on the left, nearly-closed shapes in the middle and open structures on the right;
- Fig. 21: an illustrative partially sectioned side view of a detail of an apparatus with inserted preform and a pantograph mechanism as a drive for driving the segments of the inner tool;
- Fig. 22: an illustration of a curved profile manufacturable using an apparatus of Fig. 23;
- Fig. 23: an illustrative cross-section-like side view of a detail of an apparatus with an outer tool having a set of two segments and an inner tool having a first set of one segment and a second set of two segments;
- Fig. 24: an exemplary cross-section along the line A-A' of the profile of Fig. 22;
- Fig. 25: another exemplary cross-section along the line A-A' of the profile of Fig. 22;
- Fig. 26: a schematic illustration of a cross-section along the part axis of a detail of an apparatus for manufacturing a ring-shaped (cylinder-surface-like) part, with inserted material being compressed;
- Fig. 27: a detailed view of an interface between a segment of the first and a segment of the second set of the second tool.

The reference symbols used in the figures and their meaning are summarized in the list of reference symbols. The described embodiments are meant as examples and shall not confine the invention.

### Detailed Description of the Invention

Parts, for instance ring-shaped structures, made of reinforced plastics can be manufactured since overlapping layers of a preform, usually made of prepreg material, merge during a production process involving pressing and usually also heating such that no more relevant intersections between the layers exist in the so-produced (seamless) part. Forces applied to a so-obtained part are transferred from one fiber strand to the next in the overlapping areas through shear forces in the matrix, and thus, the resulting structural impairment is very small compared to weld seams or glued surfaces.

Various semi-finished products can be used as a preform to be processed afterwards. For example: different fiber matrix combinations, or pre-impregnated (prepreg) non-consolidated fiber semi-finished products, or non-impregnated semi-finished products combined with films of not-reinforced polymer. Even thermoset or elastomer matrix systems can be processed in the proposed method.

For example, the following fiber materials can be used: carbon fibers, glass fibers, aramide fibers, basalt fibres, Poly p-phenylene benzobisoxazole (PBO) fibers, boron fibres, polyamide fibres, flax fibres, hemp, cotton, or combinations thereof. In general, as long as process pressure, time and temperature do not deteriorate the properties of the fibers in the produced part, any type of fiber can be used. Selection is made by most importantly considering by means of which fiber the desired properties of the produced part can be achieved.

There are various ways for manufacturing a preform, in particular a ring-like shaped preform. Here are some examples:
i) A tape-shaped semi-finished product such as prepregs is provided in stripes, e.g., by cutting it into stripes. The stripes are positioned in such a way, that the desired preform, in particular a ring-shaped preform is obtained. The stripes can be flush to each other, overlapping, or in multiple layers.
ii) The preform, in particular a ring-shape, is formed by coiling up a semi-finished product such as prepregs to a spiral.
iii) A tape-shaped semi-finished product such as a prepreg is provided in stripes, e.g., by cutting it into stripes. The preform, in particular the ring-like shaped preform, is formed by gradually inserting the stripes into a pressing tool (cf. the examples and Figs. of tools below, in particular the outer tools). Cutting and/or inserting can be accomplished manually or automatically.
iv) Incisions are cut into a semi-finished product such as prepregs, such that the incisions do not divide it into completely separated portions. The purpose of these incisions is to cut through the reinforcing fibers inside the semi-finished product layers. The incisions are preferably inserted in such a manner that there is an offset between incisions in neighboring layers of the semi-finished product. The so-prepared preform is inserted into a tool (cf. the examples and Figs. of tools below, in particular the outer tools), e.g., as proposed in ii). The incisions facilitate a sliding movement of the reinforcing fibers during the process of forming the preform shape and therefore decrease the internal stress in the resulting preform, thus facilitating filling the preform into the tool.
v) Likewise, a semi-finished product cut to stripes (cf. i) or iii)) is provided with incisions as described in iv) prior and/or after being cut to stripes. Then, the preform is shaped like described in i), or the stripes are inserted into a tool as described in iii).

Monitoring and/or controlling the temperature of the preform before and/or during exposing it to pressure in an apparatus with tools is recommended at least for thermoplastics in order to have a well-defined and stable process. The tolerance of the process temperature may be 10°C to 20°C or even around 50°C, or even more, depending on the material to be processed and with the process temperature chosen sufficiently high above T_{M} and T_{G}, respectively.

In case of reinforced thermoplastics as matrix material in which the fibers are embedded, it is the thermoplastic material which basically defines the relevant process temperatures.

For semi-crystalline thermoplastic materials, the crystalline melting temperature T_{M} (e.g., 162°C for polypropylene) and the crystallization temperature T_{C} are relevant. T_{C} can be more than 40°C lower than T_{M}, depending on the specific thermoplastic material.

A preform has to be heated at least up to its crystalline melting temperature T_{M}. This can be accomplished by direct heating, e.g., using strip heaters, by radiation, e.g., using infrared radiators, by hot air convection, or by indirect heating through a tool in which the preform is pressed. A combination of two or more of these heating methods is also possible.

The arrangement of the heating devices is preferably chosen such that the preform is heated uniformly and quickly to a temperature higher than T_{M}, in particularly to a process temperature clearly above T_{M}, in most cases it will be chosen at least 20°, at least 50°C, or at least 75°C above T_{M}.

In the case of amorphous thermoplastic materials, there are no distinct temperature limits aside from the so-called glass transition temperature T_{G}. The processing temperature has to be above T_{G}, in particularly clearly above T_{G}, in most cases it will be chosen at least on 20°C, at least 50°C, at least 100°C or at least 150°C above T_{G}. Likewise, there is also no crystallization temperature T_{C} for amorphous thermoplastic materials (because they remain amorphous). For the solidification of the material, the solidification temperature T_{S} (which usually is slightly higher than T_{G}, typically by between 10°C and 40°C) is of importance.

The principles of the processing methods are the same for amorphous and for semi-crystalline thermoplastic materials; but definitions and denotations of the temperature limits vary.

The following table shows some exemplary thermoplastic polymer materials usable in the proposed process. The temperature ranges are merely a reference for the corresponding bulk polymers. Depending on the specific modification of the polymers, the values can strongly deviate from the values in the table.

| **polymer** | **T_{M} [°C]** | **T_{G} [°C]** | **T_{C} or T_{S} [°C]** |
|---|---|---|---|
| **poly ether imide (PEI)** | - | 210-220 | 220-250 |
| **poly ether ether ketone (PEEK)** | 335-345 | | 290-310 |
| **poly ether sulphone (PES)** | - | 210-220 | 220-250 |
| **poly sulphone (PSU)** | - | 175-185 | 185-200 |
| **poly phtalamide (PPA)** | 310-330 | | 270-290 |
| **poly ethylene terephtalate (PET)** | 250-270 | | 210-230 |
| **poly butylene terephtalate (PBT)** | 200-230 | | 160-190 |
| **poly amide 12 (PA12)** | 175-185 | | 135-150 |

Elastomers and thermosetting plastics have a low viscosity, allowing to inject them into a mold cavity (formed by tools of the apparatus), e.g., in a resin transfer molding (RTM)-like process. It is also possible to use prepregs based on thermosets or elastomers as a preform.

The apparatus (equipment) suitable to perform the proposed method comprises an inner and an outer tool (or inner and outer "mold"), wherein the total number of segments comprised in both tools is at least three. In a very simple configuration, this means that either the outer tool comprises exactly one segment and the inner tool comprises exactly two segments, or the outer tool comprises exactly two segments and the inner tool comprises exactly one segment.

At least one of said tools is arrangeable in an open position in which a preform can be inserted into the apparatus before the preform is pressed in a pressing step and/or in which a pressed part can be released from the apparatus after said pressing step, and arrangeable in a closed position in which the pressing step / the forming process takes place. The outer and inner tools are reciprocally movable with respect to one another either by moving only one of them or by moving both.

In particular, if parts shall be produced having more complex shapes, like for instance open or closed ring-shaped structures, the inner and the outer tools are preferably each composed of two or more tool segments. This enables or facilitates to remove the part from the tools.

The tools can be made of the same or of different material. Metals and alloys, e.g., steel or aluminum, are suitable as materials for tools, because they are resilient and at the same time cost-effective and easily workable into the needed shape required in order to obtain the desired part.

If necessary, adhesion between matrix material of the preform and a tool surface can be avoided in that the surface of the tool is treated, e.g., with a commercial grade releasing agent.

In case of too little adhesion between matrix material of the preform and a tool surface, gluing substances or the like can be applied between matrix material of the preform and the tool surface in order to avoid uncontrolled / undesired mutual sliding of different layers comprised in the preform.

Since some materials and/or geometries may require a controlled cooling procedure or a thermal post-treatment, the presence of at least one heating and/or cooling device is recommended not only during pressing and/or before pressing has started (in order to reduce the pressing time), but also afterwards. E.g., a heating and/or cooling device can be incorporated directly into the apparatus, more particularly into one or both tools. And/or another heating and/or cooling device can be provided separately from the tools. Ways of accomplishing heating have been cited above. With respect to cooling, the same principles can be applied, but inversely, e.g., by using cold water serpentines or similar means well-known in the art.

In order to achieve a forming pressure suitable for both, the employed preform matrix material (mainly composing the preform), and for the shape of the part to be produced, different methods can be used, e.g., mechanically, hydraulically or electromechanically exerting a force on an external surface of at least one of the inner and outer tools. In order to achieve a very good fit between all of the tool segments and/or between the tools and the preform arranged between the tools, and in order to ensure a suitable direction of the applied force and a suitable pressure distribution, it is advisable to suitably guide the applied force, e.g., by using push rods or pull rods, wherein many alternatives are known to a person skilled in the art.

The process, or at least the pressing step (and therefore the movement of the segments) and preferably also the heating, is preferably automatically controlled, e.g., using a suitable software running in a controller or in a computer, e.g., the software controlling important parameters as for instance times for cooling, for heating and for pressing, temperature and pressure.

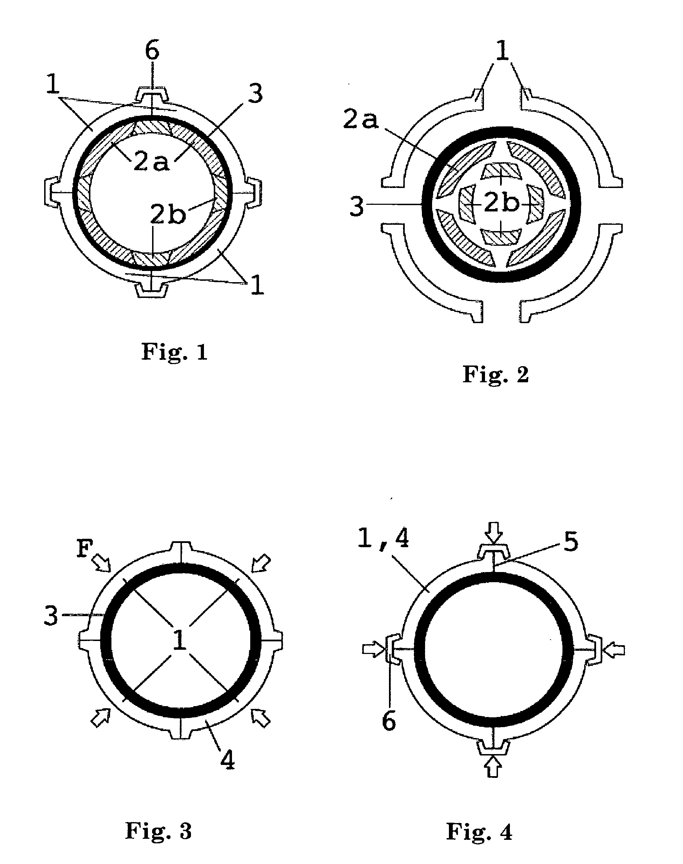

Figs. 1 to 19 illustrate a first example of a method and of an apparatus for manufacturing parts. It is a method and an apparatus for manufacturing a ring-shaped structure of fiber-reinforced plastics, for instance a rim for a car wheel made of carbon fiber reinforced polyetherimide (PEI). In particular, oriented continuous fibers are used as reinforcement. The Figs. 2 to 19 illustrate subsequent process steps and, in some cases of subsequent Figures, illustrate different views of approximately the same process step. But the so-implied order of process steps does not exclude that a different order of steps could be chosen or that steps could be added or deleted.

Fig. 1 illustrates a top view onto a detail of an apparatus for manufacturing parts, more precisely, it illustrates a cross-section through the apparatus. The apparatus comprises a first tool which is an outer tool or outer mold and a second tool which is an inner tool or inner mold.

The outer tool comprises a set of segments comprising four segments 1 which are pair-wise clamped to each other by clamps 6.

The inner tool comprises a first set of segments comprising four segments 2a and a second set of segments comprising four segments 2b.

First tool (outer tool) and second tool (inner tool) are shown in closed position.

In Fig. 1, the apparatus is shown with a preform 3 inserted between inner and outer tool. The shape of the cavity between segments 1 of the outer tool and segments 2a,2b of the inner tool corresponds to the shape of the part to be produced, such as a rim.

In Fig. 2, a detail of the apparatus is illustrated with outer tool and inner tool in opened position, with inserted preform 3 therebetween. The preform 3 can be a substantially cylindrical arrangement of suitable prepregs.

Fig. 3 illustrates that now, the outer tool is closed by application of forces F (illustrated by open arrows), e.g., applied against the outer surface of the outer tool. Reference 4 denotes the outer tool in closed position. The closed position can be considered a pressing-ready geometry of the outer tool as will become clear further below.

In order to increase the stiffness of the outer tool in the closed position 4, clamps 6 are applied to the outer tool, see Fig. 4. By the clamps 6, pressure is applied driving contacting interfaces 5 of the outer tool pairwise towards each other. Screws or others could be used instead of clamps 6.

It is possible to start at this point a heating of the inner and/or of the outer tools (preferably both). A person skilled in the art will recognize that the heating process and the start of the heating can be scheduled earlier or later depending in particular on requirements given by the process and by the material or materials of the preform 3.

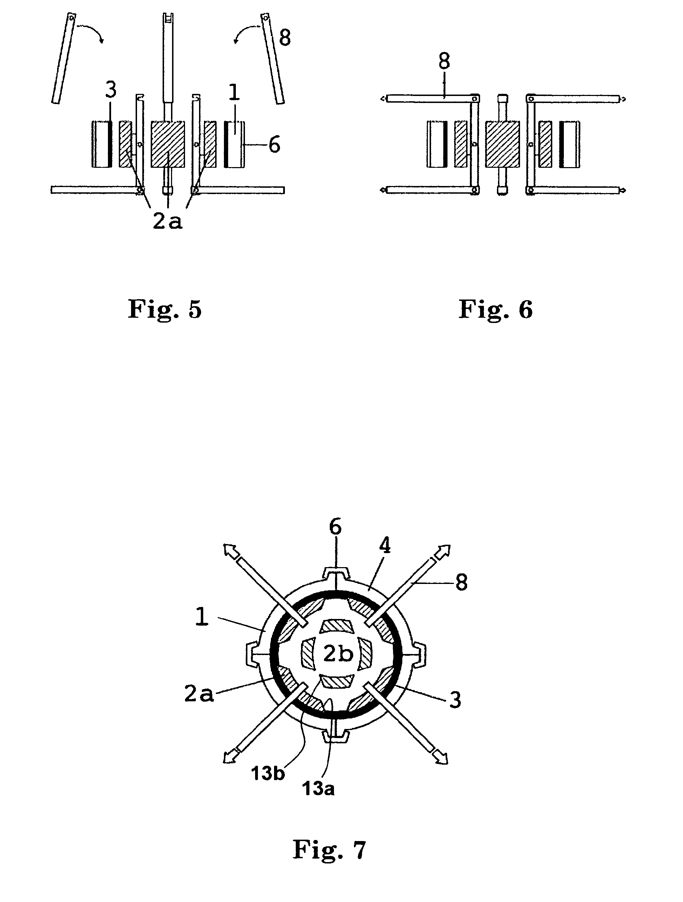

Fig. 5 shows an illustrative cross-section-like side view of a detail of an apparatus with inserted preform 3, with outer tool 4 in closed position, while rods 8 of a first set of pull rods are being connected.

Fig. 6 shows an illustrative cross-section-like side view of a detail of an apparatus with inserted preform, while the rods 8 of the first set of pull rods are operationally connected to the segments 2a of the first set of segments of the inner tool. The rods 8 are in action exerting forces on the segments 2a, as illustrated by the small arrows. This way, the preform 3 is pressed (with low pressure) between the first tool and the segments 2a of the first set of the inner tool.

Fig. 7 illustrates the same situation as Fig. 6, but in a top view-like view onto a cross-section of a detail of the apparatus. The segments 2b of the second set of the inner tool are already illustrated in Fig. 7. As can be seen, by the movement of the segments 2a towards the outer tool and the preform 3, space is created between neighboring segments 2a. This space will be used for introducing the segments 2b between the segments 2a such that segments 2b can apply pressure against preform 3, too (see below). The segments 2a have mating surfaces 13a and the segments 2b have mating surfaces 13b. In closed position of the second tool, the mating surfaces 13a and 13b will mate, pairwise, see Figs. 1, 12, 13 and 14.

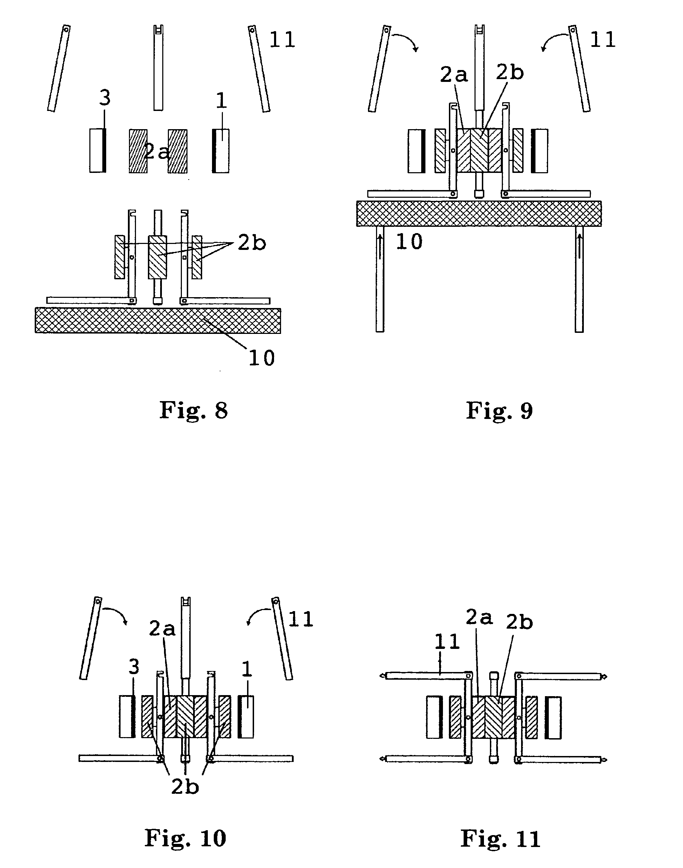

Fig. 8 shows an illustrative cross-section-like side view of a detail of an apparatus with inserted preform and a displacing mechanism 10. The situation is like illustrated in Figs. 6 and 7, but the rods 8 of the first set of pull rods connected and in action exerting (low) forces on the segments 2a of the inner tool are not drawn. But rods 11 of a second set of pull rods are shown. Driven by displacing mechanism 10, e.g., a lift actuated by an electrical motor, the segments 2b of the second set of the inner tool are being moved into the preform 3.

In Fig. 9, which is illustrated like Fig. 8, the segments 2b of the second set of the inner tool are located inside the preform 3, and the rods 11 are being connected.

Fig. 10 illustrates the situation of Fig. 9, but the driving mechanism is not shown.

In Fig. 11, the rods 11 are connected and in action exerting forces on segments 2b of the second set of the inner tool. Note that still the rods 8 of the first set of pull rods are connected and in action exerting forces on segments of the first set of the inner tool. Note further, that segments 2b not only press against preform 3, but also against the segments 2a, namely at their mutual contacting interfaces, i.e. at the mating surfaces 13a,13b.

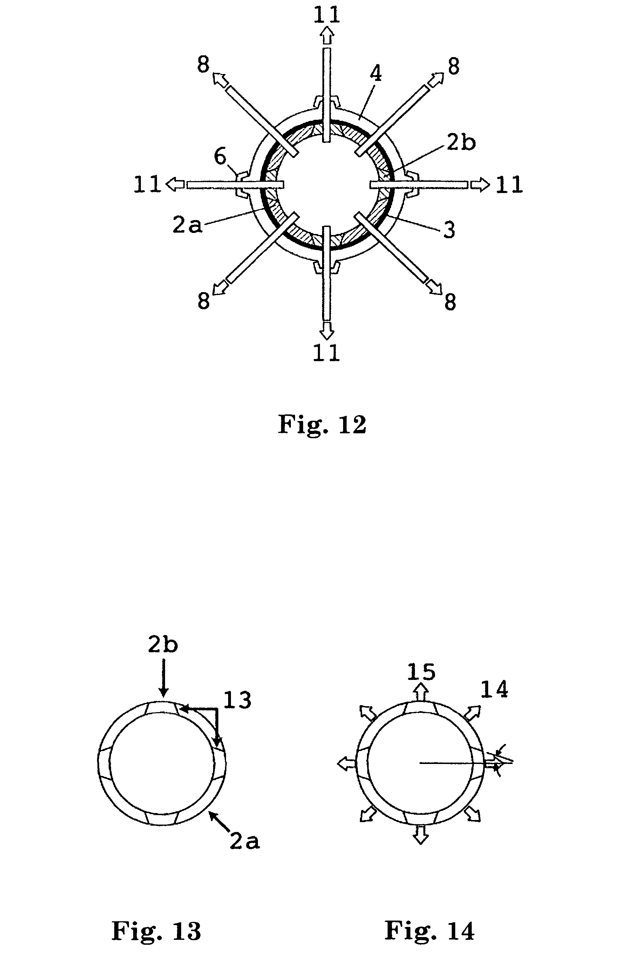

Fig. 12 illustrates the situation of Fig. 11 in a top-view-like view. The preform 3 is pressed against the outer tool by segments 2a and, in those regions of its inner surface which are not in contact with segments 2a, by the segments 2b. The temperature of the now consolidating preform 3 shall be between 217°C (which is T_{G} for the depicted material) and 400°C, preferably between 300°C and 350°C.

It shall be mentioned that the contacting interfaces 13 (cf. Fig. 13 illustrating a top view onto the inner tool) between segments 2a and 2b formed by the mating surfaces 13a and 13b (cf. Fig. 7) do not only result in a particularly efficient process. They also provide an excellent distribution of the forces exerted on the preform 3 by segments 2a and 2b. This is because there is not only force-fitting but also form-fitting of all the segments 2a,2b of the inner tool.

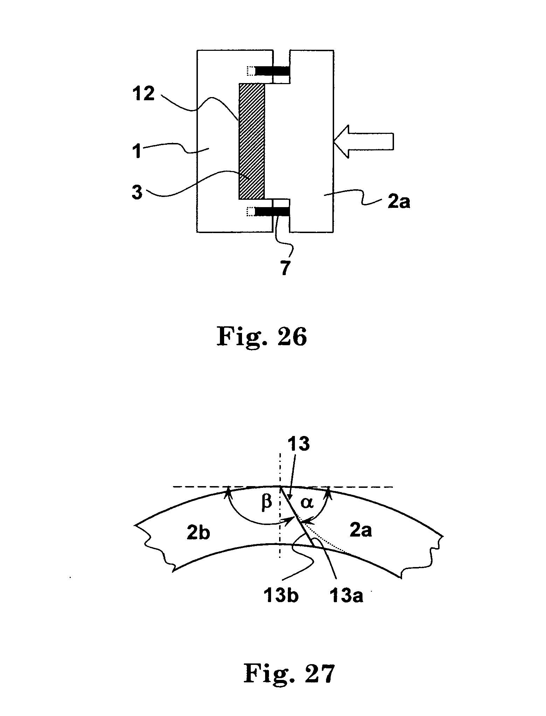

The contact interfaces 13 (cf. Fig. 13) between segments 2a and 2b are angled with respect to the moving directions of the segments 2a and 2b, respectively (cf. force vectors 14 and 15 in Fig. 14 illustrating a top view onto the inner tool) in the direction indicated in Fig. 4, namely in such a way that the segments 2b can be moved into and fit into the spaces left between the segments 2a. This leads to an acute angle α for segments 2a and an obtuse angle β for segments 2b (cf. Fig. 27). Preferable, the angle α is chosen at least 1°, at least 2° or at least 4° smaller than the angle geometrically given by the insertability of the segments 2b next to (or between) segments 2a along the moving path of segments 2b.

Segments 2a and 2b are pulled (by pull-rods 8 and 11, respectively) toward the preform 3 until they reach a preset position (closed position). In that position, the cavity between outer tool and inner tool equals the shape of the part to be manufactured, i.e. the rim shape. Together, the outer surfaces of the segments 2a and 2b now have the shape of and form the inner surface of the part to be manufactured.

The pressure (forming pressure) exerted onto the preform 3 through segments 2a and 2b is upheld for between 2 seconds and 2 minutes, preferably between 20 seconds and 1 minute, for a consolidation of the thermoplastic resin in the layers of the preform 3. In the present example, the process pressure has to be between 5 bar and 50 bar, preferably between 8 bar and 20 bar. These wide time and pressure ranges are one of the great advantages of the presented process, making it easier to run-in a new part geometry, and a new part geometry usually has one main variable: the number of prepreg material layers.

For example, in case of a rim for a bike wheel, only very few layers are needed, and therefore 10 seconds pressing time can already be sufficient, whereas in case of a wheel for a car, the number of layers is substantially higher, e.g., a few dozens, and thus, the pressing time rises to, e.g., 20 or 30 seconds.

The pressing time and the pressure are roughly proportional to the number of layers in the preform 3, although other factors such as the complexity of the geometry of the part to be formed do also influence these parameters, but usually less strongly.

At this point, cooling of the inner and outer tool usually will be commenced, while still maintaining the pressure of the tools on the preform 3. From now on, the preform 3 can be referred to as part 16, in the present example: the rim 16. Cooling can of course be accelerated by, for example, cooling serpentines in the tools.

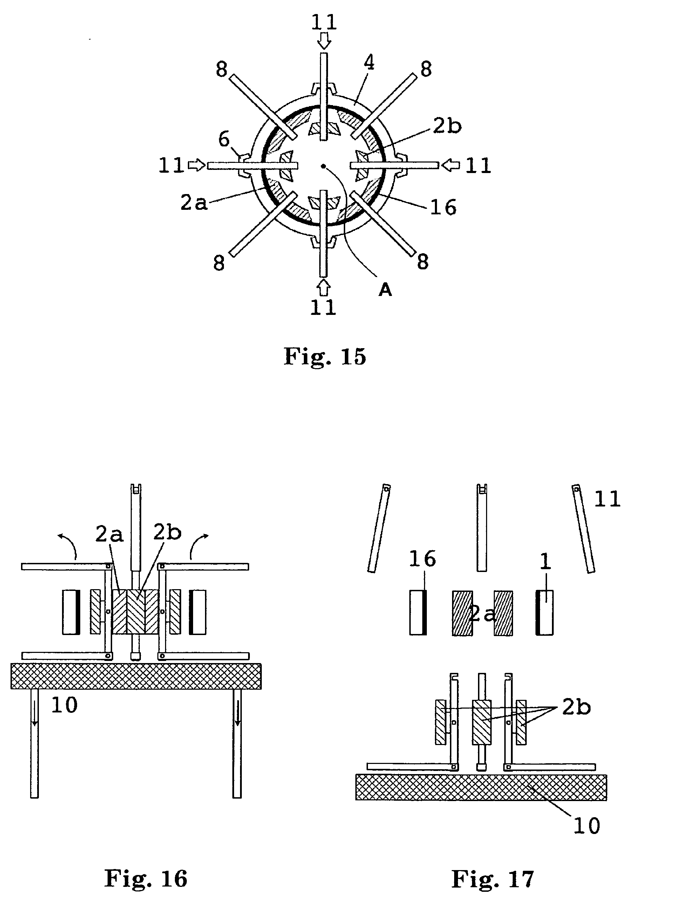

While cooling, after having reached a temperature where the chosen material is solid, the pressure on the rim 16 will be reduced by loosening the rods 11. The segments 2b are moved away from the rim 16. Fig. 15 depicts this in a top view onto a detail of the apparatus. The segments 2b of the second set of the inner tool are released (by moving the rods 11, see the open arrows in Fig. 15) at the end of the solidification of the material. The axis A of part 16 is perpendicular to the drawing plane

Fig. 16 illustrates in a cross-section-like side view of a detail of an apparatus that the segments 2b are in an opened position again, and the rods 11 are being disconnected. The same displacing mechanism 10 as in Figs. 8 and 9 is prepared to move the segments 2b out of the outer tool, but in the opposite way with respect to Figs. 8 and 9.

In Fig. 17, pull rods 11 have been removed, and segments 2b have been moved out of the outer tool by means of displacing mechanism 10.

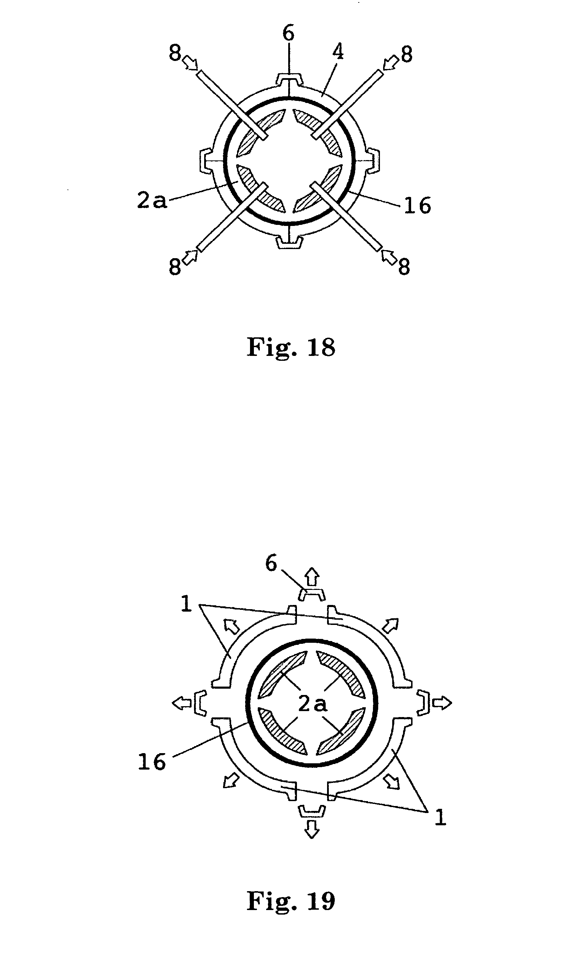

Fig. 18 illustrates that after the segments 2b of the second set of the outer tool have been moved away, the segments 2a of the second set of the inner tool are released by moving the rods 8 of the first set of pull rods in the direction of the open arrows. The part 16 is now not in contact anymore with the second (=inner) tool.

Fig. 19 illustrates that the segments 2a of the set of segments of the outer tool have been moved away after the clamps 6 have been released. When moving segments 2a away from the part 16 preferably, an external robot, an operator or other means will hold the rim 16 so that it cannot fall.

With the rim 16 removed from the tools, the apparatus is ready for the next production cycle.

A short simplified version of the proposed process can be roughly summarized by the following steps in the following order:
- inserting the preform into the closed outer tool (which is pre-heated or not);
- moving inner tool into pressing-ready position (in contact with the inserted material or nearly so);
- heating the material (via the tools) to above T_{M} (in case of semicrystalline thermoplastics) and T_{G} (in case of amorphous thermoplastics), respectively, in particular to at least 20°C, more particularly to at least 50°C, even more particularly to at least 100°C above T_{M} and T_{G}, respectively;
- compressing the material by means of the tools, at a pressure (forming pressure) of at least 10 bar, in particular at least 20° bar, typically at a pressure of between 25 bar and 50 bar;
- passively or, preferably, actively cooling the material to below T_{M} and T_{G}, respectively, in particular to at least 20°, more particularly to at least 40° below T_{M} and T_{G}, respectively;
- reducing the applied pressure;
- opening / removing at least one of said tools;
- removing the so-obtained part from the tools.

Note that applying the full forming pressure only after the material has reached a process temperature above T_{M} and T_{G}, respectively, will usually result in better quality parts than applying that full forming pressure already before the material reached that temperature.

While the first example presented above in conjunction with Figs. 1-19 is only one way to carry out the process, there are still other possibilities. E.g., outer and inner tools could work in chronologically reversed order: The inner tool could firstly be positioned in a closed position (cf. Figs. 12, 13, 14) and hold the preform 3, and then, the segments of the outer tool approach and enclose the preform 3.

Also another process is possible: A robot keeps the preform 3 in position, and both, the inner tool and the outer tool, substantially simultaneously move from the opened position into the closed position represented by Fig. 12.

In case of the tools and a ring-like part according to the first example, the minimal number of segments of the inner tool (2a and 2b, together) is four. In general, if a perfectly cylindrical or conical part has to be produced, one single cylindrical segment for the outer tool is in principle sufficient. But if the radial cross section of the rim presents at least one undercut in axial direction, at least two segments have to be used for the outer tool in order to remove a manufactured stiff part from the tools.

In case of the aforementioned chronologically inversed or simultaneous movement of the segments of the tools, these minimal numbers of segments may change accordingly.

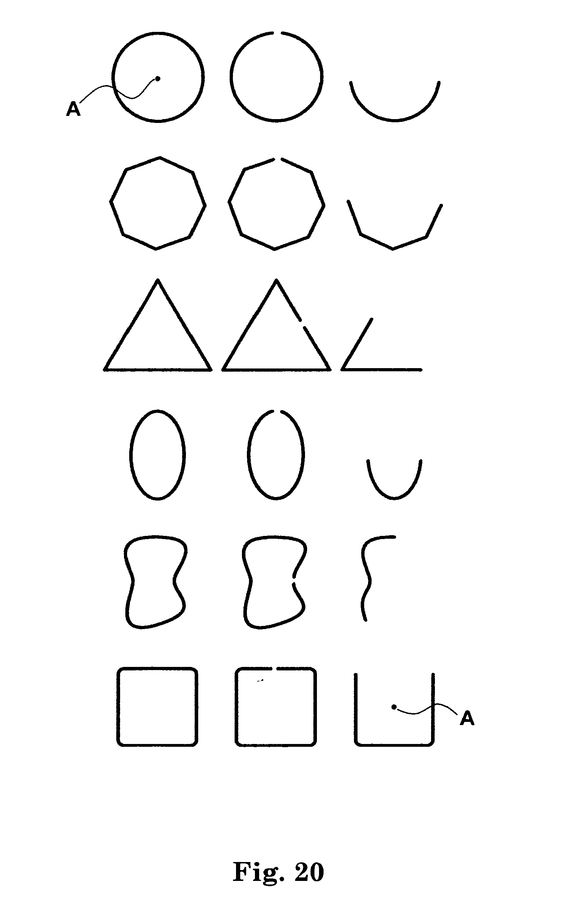

If the cross-section of the preform 3 perpendicular to its axis is not perfectly circular, as for instance in an open ring-shaped structure or in an elliptical structure, the process can be adapted by replacing the perfectly circular inner and outer tools with correspondingly shaped other inner and outer segments having the suitable curvature and/or shape, cf. the various examples illustrated in Fig. 20.

Fig. 20 is a very schematic illustration of various cross-sections perpendicular to a part axis, namely closed shapes (ring-like shapes) on the left, nearly-closed shapes in the middle and open structures on the right. Note that a part axis can be bent / curved, e.g., a part can describe the shape of the surface of a portion of a torus. And note further that a part cross-section may vary along the part axis, e.g., a part can describe a portion of a cone.

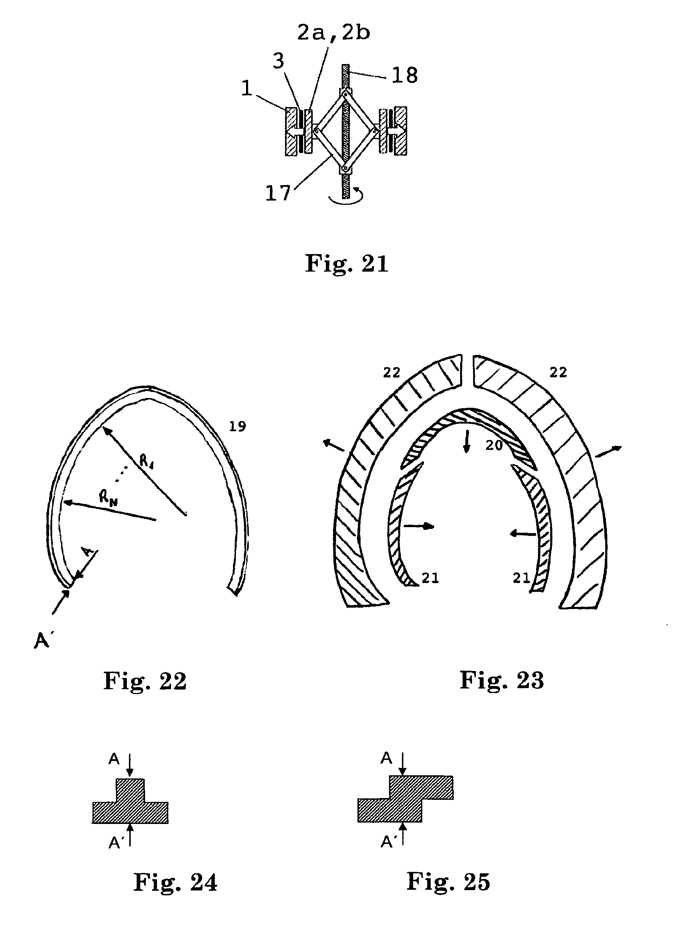

Fig. 21 illustrates another example of a method and of an apparatus for manufacturing parts. Fig. 21 shows an illustrative partially sectioned side view of a detail of a corresponding apparatus with inserted preform and a pantograph mechanism 17 as a drive for driving the segments 2a,2b of the inner tool (only segments 2a or segments 2b are drawn). In this second example, a pantograph 17 is used for moving segments of the inner tool. Accordingly, a different pressing principle is employed.

The segments 2a and 2b of the inner tool are mounted on pantograph 17. While turning pantograph bolt 18, the segments 2a and 2b move, since mounted on one and the same pantograph 17, towards the closed outer tool, thus applying the desired pressure on the preform 3. E.g., the segments 2a,2b are moved such that firstly, segments 2a get into contact with the inserted material, and then segments 2b get into contact with the inserted material, or segments 2a are moved earlier and/or at a different speed than segments 2a. Generally, segments 2b will never be closer to the material 3 than segments 2a on their respective way towards and into the closed position. Suitably designing the pantograph arms allows to achieve such movements. After heating and pressing, the part can be extracted from the tools by turning the pantograph bolt 18 in the opposite way.

A third example of a method and of an apparatus for manufacturing parts is described in conjunction with Figs. 22 and 23. Fig. 22 is an illustration of a curved profile 19 manufacturable using an apparatus sketched in Fig. 23. Fig. 23 is an illustrative cross-section-like side view of a detail of an apparatus with an outer tool having a set of two segments 22 and an inner tool having a first set of one segment 20 and a second set of two segments 21.

This third example refers to a method and an apparatus for manufacturing carbon fiber reinforced polyetheretherketone (PEEK) open profiles 19, for instance a stringer for reinforcing aircraft fuselages (cf. Fig. 22). Profile 19 may present, e.g., an I-, a T- or a C-shaped or an approximately Z-shaped cross-section (along the line marked A-A' in Fig. 22), and, moreover, the cross-section may vary along the length extension of the profile. Figs. 24 and 25 illustrate exemplary cross-sections along the line A-A' in Fig. 22, namely a T-shaped and an approximately Z-shaped cross-section, respectively.

And profile 19 can have continuously changing bending radii (cf. R1 and RN in Fig. 22). By means of the described process and apparatus, it is possible to manufacture profiles with locally variable radii and a locally variable cross-section.

The process parameters of temperature, pressing time and pressure of the first example (see above) can also be applied in this case.

In general, the process also works in substantially the same way as the above-described first example and with a principally equivalent or at least similar apparatus. A main difference is the number of segments: in this case, the inner tool has to comprise at least one central segment 20 and two lateral segments 21, while the outer tool has to comprise at least two segments 22.

The particular example of Figs. 22 to 25 (third example) may work with only two internal segments instead of the described three ones (one central one 20 and two symmetric ones 21) if there is only one internal radius R1 or if the length of the profile allows to do it (not shown).

In general, in practice the minimal number of segments is basically given by two factors:
- the segments have to be designed in such a way that they do not collide with each other while moving back and forth from opened to closed position and vice versa;
- the preform and the pressed part, respectively, have to be easily placeable into and removed from the tools and/or their segments.

Fig. 26 shows a schematic illustration of a cross-section of a detail of an apparatus for manufacturing a ring-shaped (cylinder-surface-like) part, with inserted material 3 being compressed. The cross-section is a cross-section along the axis of the part. The open arrow symbolizes force applied to material 3 via segment 2a of inner tool such that material 3 is compressed within the cavity formed between inner and outer tools thus assuming the shape defined by the tools. Guidances 7 such as pins attached to segment 2a interacting with holes (dotted lines in Fig. 26) in segment 1 can be used for ensuring a suitable alignment of inner and outer tool. Reference 12 denotes the inner surface of the outer tool and therefore also the outer surface of part to be produced. In the cross-section illustrated in Fig .27, this surface 12 shows up as a line, the part to be manufactured substantially describing a cylinder jacket. More complicated shapes are possible, e.g., varying the cylinder radius along the cylinder axis. By appropriate variations of that radius (and of the corresponding inner radius of the part), a rim for an automobile can be the produced part. The principle explained in Fig. 26 can well be applied, e.g., to the first example illustrated in Figs. 1 to 19.

Fig. 27 shows a detailed view of an interface 13 between a segment 2a of the first set of the second tool and a segment 2b of the second set of the second tool, e.g., as it can be used in the first example illustrated in Figs. 1 to 19. The interface 13 is more particularly formed by mating surface 13a of segment 2a (cf. also Fig. 7) and mating surface 13b of segment 2b (cf. also Fig. 7). Segment 2a, more particularly its mating surface 13a (cf. also Fig. 7), forms an acute angle α with the local tangent of the inner tool. That local tangent is indicated as a dashed line in Fig. 27. Correspondingly, segment 2b, more particularly its mating surface 13b (cf. also Fig. 7), forms an obtuse angle β with the local tangent of the inner tool. Acute angle α usually will amount to between 89° and 40°, more particularly between 88° and 60°, even more particularly between 86° and 70°.

Note that the interface 13 and the mating surfaces 13a and 13b do not necessarily have to be plane. As indicated by the dotted line in Fig. 27, curved interfaces 13 and surfaces 14 are possible, too. The provision of an acute angle α leads to better arranged and better shaped fibers in the finished part.

It will be appreciated that the segment(s) 2b (first and second example) and 21 (third example) of the second set are (is), on their way towards the closed position always farther away (along their travel path) from their (its) position when in closed position than - at the same time - the segment(s) 2a (first and second example) and 20 (third example) of the first set (along their travel path) from their (its) position when in closed position.

One can, somewhat sloppily, say, the segment(s) 2b, 21 of the second set cannot pass by or "overtake" the segment(s) of the first set on their respective way into the closed position.

This allows to form parts with narrow concave surfaces. A limited space available for the segments is cleverly used. Different sets of segments are moved at different times and/or at different speeds to overcome geometrical limitations. Note that, similarly to what was discussed above in conjunction with the second example (cf. Fig. 21), it is also in case of the first example (cf. Figs. 1-19) possible to have the segments 2a still moving and still not yet in the closed position while segements 2b are already on their way moving towards the closed position; in the description of the first example in conjunction with Figs. 1-19, segments 2b are moved into their initial position only after segments 2a are already in their closed position.

The described method and apparatus is excellently suited for the manufacture of pressure-formed fiber-reinforced plastics parts from preforms, in particular for such parts which have or comprise a portion having a shape which is ring-like or nearly-closed or is rather complex with concave portions, in particular wherein continuous fibers and/or oriented fibers are used as reinforcement.

### List of Reference Symbols

- 1: segment, segment of first tool, outer mold segment
- 2a: segment, segment of first set of second tool, inner mold segment
- 2b: segment, segment of second set of second tool, inner mold segment
- 3: preform, prepregs
- 4: first tool in closed state, outer mold in closed state
- 5: contacting interfaces of segments of first tool, contacting interfaces of segments of outer mold
- 6: clamp
- 7: guidance, guiding means, guiding pin
- 8: pull rod, rod of first set of pull rods
- 10: displacing mechanism
- 11: pull rod, rod of second set of pull rods
- 12: outer surface of part to be produced, inner surface of outer tool
- 13: contacting interface, interface between a segment of the first and a segment of the second set of the second tool
- 13a: mating surface of a segment of the first set of the second tool
- 13b: mating surface of a segment of the second set of the second tool
- 14: force vector
- 15: force vector
- 16: part, rim
- 17: pantograph
- 18: pantograph bolt
- 19: part, profile
- 20: segment, segment of first set of second tool, inner mold segment, central mold segment
- 21: segment, segment of second set of second tool, inner mold segment, lateral mold segment
- 22: segment, segment of first tool, outer mold segment, segment of external mold
- A: axis, part axis
- R₁...R_{N}: bending radius
- α: angle, acute angle
- β: angle, obtuse angle

## Claims

1. Method for manufacturing parts (16; 19), said parts being rims (16) or wheels for vehicles, aircraft stringers (19), or electrical insulators, said parts comprising fiber-reinforced plastic, comprising the steps of
a) providing material (3), said material comprising fiber reinforced plastic;
b) providing a first tool comprising at least one set comprising at least one segment (1; 22);
c) providing a second tool comprising at least one first and at least one second set of at least one segment (2a;2b; 20,21) each, said segments (2a;2b; 20,21), when arranged next to each other in a predefined way, referred to as closed position, form a second-tool surface describing the shape of a portion of a surface of said part to be manufactured;
d) moving the at least one segments (2a; 20) of said first set of said second tool into said closed position;
e) moving the at least one segments (2b; 21) of said second set of said second tool towards and into said closed position;
f) compressing between at least said first and second tools at least a portion of said material (3), in particular at least substantially all of said material
(3), by applying pressure to at least one of said first and second tools; wherein said segments (2a; 2b; 20,21) of said second tool are moved such that continually during moving of the at least one segments (2b; 21) of said second set of said second tool towards said closed position, a momentary travel distance up to said closed position for the at least one segments (2b; 21) of said second set of said second tool exceeds a momentary travel distance up to said closed position for the at least one segments (2a; 20) of said first set of said second tool.

2. The method according to claim 1, wherein said first tool is an outer tool and said second set is an inner tool, or vice versa.

3. The method according to claim 1 or claim 2, wherein at least one of, in particular each of said sets of segments (1; 22; 2a; 20; 2b; 21) comprises at least two, in particular at least three, more particularly at least four segments.

4. The method according to one of the preceding claims, wherein said material (3) is provided substantially in form of foils or sheets or stripes.

5. The method according to one of the preceding claims, wherein said material (3) as well as said part (16; 19) are at least substantially made of fiber reinforced plastics.

6. The method according to one of the preceding claims, wherein said material (3) substantially is a preform or a prepreg material.

7. The method according to one of the preceding claims, wherein said parts comprise a portion having a substantially ring-shaped or ring-like structure, or wherein said parts substantially have a ring-shaped or ring-like structure.

8. The method according to one of the preceding claims, wherein, during said compressing said material (3), an area of said material (3) which is in contact with said first set of said second tool is larger than, in particular is at least two times, more particularly at least three times as large as the area of said material (3) which is in contact with said second set of said second tool.

9. The method according to one of the preceding claims, wherein said first and second tools are tools the shape of which determines the shape of said parts.

10. The method according to one of the preceding claims, wherein, for said first set of said second tool and/or for said second set of said second tool, the segments (2a; 2b; 20; 21) of the respective set are moved such that a pressure onto said material (3) to be compressed exerted by one of the segments (2a; 2b; 20; 21) of said respective set is at least approximately the same for each of said segments (2a; 2b; 20; 21) .

11. The method according to one of the preceding claims, wherein at least one of said segments (2b; 21) of said second set of said second tool is shaped such that when compressing said material, forces are exerted by said segment (2b; 21) onto at least one segment (2a; 20) of said first set of said second tool.

12. The method according to one of the preceding claims, wherein by said compressing, a pressure of at least 5 bar and in particular of at most 50 bar is exerted on said material.

13. The method according to one of the preceding claims, comprising the step of heating said material (3) before and/or during and/or after said compressing.

14. The method according to one of the preceding claims, which is a method for manufacturing seamless parts substantially made of oriented continous-fiber reinforced plastics, in particular wherein said plastics is a thermoplastic.

## Patentansprüche

1. Verfahren zur Herstellung von Teilen (16; 19), wobei diese Teile Felgen (16) oder Räder für Fahrzeuge, Stringer für Flugzeuge (19) oder elektrische Isolatoren sind, wobei die Teile faserverstärkten Kunststoff umfassen und das Verfahren folgende Schritte umfasst:
a) Material (3) bereitstellen, das faserverstärkten Kunststoff umfasst;
b) ein erstes Werkzeug bereitstellen, das zumindest einen Satz mit zumindest einem Segment (1, 22) umfasst;
c) bereitstellen eines zweiten Werkzeugs, das zumindest einen ersten und zumindest einen zweiten Satz umfasst, wobei jeder zumindest ein Segment (2a; 2b; 20; 21) umfasst und die Segmente (2a; 2b; 20; 21), wenn sie in einer vorgegebenen Art möglichst nah zueinander, im Folgenden als geschlossene Position bezeichnet, eine zweite Werkzeugoberfläche bilden, damit die Form eines Abschnitts einer Oberfläche des Teils wiedergeben, der hergestellt werden soll;
d) bewegen des zumindest einen Segments (2a; 20) des ersten Satzes des zweiten Werkzeugs in die geschlossene Position;
e) bewegen des zumindest einen Segments (2b; 21) des zweiten Satzes des zweiten Werkzeugs in Richtung und in die geschlossene Position;
f) komprimieren zumindest eines Teils des Materials (3), im Besonderen zumindest im Wesentlichen des ganzen Materials (3), zwischen zumindest dem ersten und dem zweiten Werkzeug durch Aufbringen von Druck auf zumindest eines der ersten oder zweiten Werkzeuge; wobei die Segmente (2a; 2b; 20; 21) des zweiten Werkzeugs so bewegt werden, dass während der Bewegung des zumindest einen Segments (2b; 21) des zweiten Satzes des zweiten Werkzeugs in Richtung der geschlossenen Position, der momentane Verfahrweg bis in die geschlossene Position für das zumindest eine Segment (2b; 21) des zweiten Satzes des zweiten Werkzeugs fortwährend den momentanen Verfahrweg in die geschlossene Position für das zumindest eine Segment (2a; 20) des ersten Satzes des zweiten Werkzeugs übertrifft.

2. Verfahren nach Anspruch 1, wobei das erste Werkzeug ein äusseres Werkzeug und das zweite Werkzeug ein inneres Werkzeug ist oder umgekehrt.

3. Verfahren nach einem der Ansprüche 1 oder 2, wobei zumindest eines der, im Speziellen jeder der Segmentsätze (1; 22; 2a; 20; 2b; 21) zumindest zwei, vorzugsweise zumindest drei, insbesonders bevorzugt zumindest vier Segmente umfasst.

4. Verfahren entsprechend einem der vorhergehenden Ansprüche, wobei das Material (3) im Wesentlichen in der Form von Folien, von Blättern oder von Streifen zur Verfügung gestellt wird.

5. Verfahren nach einem der vorhergehenden Ansprüche, wobei das Material (3) ebenso wie das Teil (16; 19) zumindest im Wesentlichen aus faserverstärktem Kunststoff besteht.

6. Verfahren nach einem der vorhergehenden Ansprüche, wobei das Material (3) im Wesentlichen eine Vorform oder ein Prepreg-Material ist.

7. Verfahren nach einem der vorhergehenden Ansprüche, wobei die Teile einen Abschnitt umfassen der eine im Wesentlichen ringförmige oder ringartige Struktur aufweist oder die Teile im Wesentlichen eine ringförmige oder ringartige Struktur haben.

8. Verfahren nach einem der vorhergehenden Ansprüche, wobei, während des Komprimierens des Materials (3) ein Bereich des Materials (3), der den ersten Satz des zweiten Werkzeugs berührt, grösser, bevorzugt zumindest zweimal so gross, insbesonders bevorzugt zumindest dreimal so gross ist wie der Bereich des Materials (3) der den zweiten Satz des zweiten Werkzeugs berührt.

9. Verfahren entsprechend einem der vorhergehenden Ansprüche, wobei das erste und zweite Werkzeug Werkzeuge sind deren Form die Form des Teils bestimmt.

10. Verfahren nach einem der vorhergehenden Ansprüche, wobei für den ersten Satz des zweiten Werkzeugs und/oder für den zweiten Satz des zweiten Werkzeugs die Segmente (2a; 2b; 20; 21) des entsprechenden Satzes so bewegt werden, dass der Druck auf das zu komprimierende Material (3), der durch eines der Segmente (2a; 2b; 20; 21) des entsprechenden Satzes ausgeübt wird, zumindest annähernd für jedes der Segmente (2a; 2b; 20; 21) derselbe ist.

11. Verfahren nach einem der vorhergehenden Ansprüchen, wobei zumindest eines der Segmente (2b, 21) des zweiten Satzes des zweiten Werkzeugs so geformt ist, dass beim Komprimieren des Materials Kräfte durch das Segment (2b; 21) auf das zumindest eine Segment (2a; 20) des ersten Satzes des zweiten Werkezeugs ausgeübt werden.

12. Verfahren entsprechend einem der vorhergehenden Ansprüche, wobei beim Komprimieren ein Druck von zumindest fünf Bar und bevorzugt von zumindest 50 Bar auf das Material ausgeübt wird.

13. Verfahren nach einem der vorhergehenden Ansprüche, das einen Schritt zum Erhitzen des Materials (3) vor und/oder während und/oder nach dem Komprimieren umfasst.

14. Verfahren entsprechend einem der vorhergehenden Ansprüche, das ein Verfahren zur Herstellung nahtloser Teile ist, die im Wesentlichen aus gerichtetem durch Endlosfasern verstärktem Kunststoff bestehen, wobei der Kunststoff im Speziellen ein Thermoplast ist.

## Revendications

1. Procédé pour fabriquer des pièces (16 ; 19), lesdites pièces étant des jantes (16) ou des roues pour véhicules, des lisses d'aéronef (19) ou des isolateurs électriques, lesdites pièces comprenant un plastique renforcé par des fibres, le procédé comprenant les étapes consistant à :
a) fournir un matériau (3), ledit matériau comprenant un plastique renforcé par des fibres ;
b) fournir un premier outil comprenant au moins un ensemble comprenant au moins un segment (1 ; 22),
c) fournir un deuxième outil comprenant au moins un premier et au moins un deuxième ensembles d'au moins un segment chacun (2a ; 2b ; 20, 21), lesdits segments (2a ; 2b ; 20, 21), lorsqu'ils sont agencés l'un à côté de l'autre dans un agencement prédéfini, par rapport à une position fermée, forment une surface de deuxième outil décrivant la forme d'une partie d'une surface de ladite pièce à fabriquer ;
d) déplacer le au moins un segment (2a ; 20) dudit premier ensemble dudit deuxième outil dans ladite position fermée ;
e) déplacer le au moins un segment (2b ; 21) dudit deuxième ensemble dudit deuxième outil en position fermée ;
f) comprimer entre au moins ledit premier et ledit deuxième outils au moins une partie dudit matériau (3), en particulier au moins pratiquement la totalité dudit matériau (3), en appliquant une pression sur au moins l'un desdits premier et deuxième outils ;
dans lequel lesdits segments (2a ; 2b ; 20, 21) dudit deuxième outil sont déplacés de façon à ce que pendant le mouvement dudit au moins un segment (2b; 21) dudit deuxième ensemble dudit deuxième outil vers ladite position fermée, la distance de déplacement momentanée jusqu'à ladite position fermée pour le au moins un segment (2b; 21) dudit deuxième ensemble dudit deuxième outil excède la distance de déplacement momentanée jusqu'à ladite position fermée pour le au moins un segment (2a ; 20) dudit premier ensemble dudit deuxième outil.

2. Procédé selon la revendication 1, dans lequel ledit premier outil est un outil extérieur et ledit deuxième outil est un outil intérieur, ou vice-versa.

3. Procédé selon la revendication 1 ou 2, dans lequel au moins un, en particulier chacun desdits ensembles de segments (1 ; 22 ; 2a ; 20 ; 2b ; 21) comprend au moins deux, en particulier au moins trois, et plus particulièrement au moins quatre segments.

4. Procédé selon l'une des revendications précédentes, dans lequel ledit matériau (3) est fourni essentiellement sous la forme de feuilles ou de bandes.

5. Procédé selon l'une des revendications précédentes, dans lequel ledit matériau (3) ainsi que ladite pièce (16 ; 19) sont constitués au moins en grande partie de plastique renforcé par des fibres.

6. Procédé selon l'une des revendications précédentes, dans lequel ledit matériau (3) est en grande partie une préforme ou un préimprégné.

7. Procédé selon l'une des revendications précédentes, dans lequel lesdites pièces comprennent une partie ayant une forme essentiellement annulaire ou une structure annulaire, ou dans lequel lesdites pièces ont essentiellement une forme annulaire ou une structure annulaire.

8. Procédé selon l'une des revendications précédentes, dans lequel, pendant la compression dudit matériau (3), une zone dudit matériau (3) qui est en contact avec ledit premier ensemble dudit deuxième outil est plus grande, en particulier au moins deux fois plus grande, plus particulièrement au moins trois fois plus grande que la zone dudit matériau (3) qui est en contact avec ledit deuxième ensemble dudit deuxième outil.

9. Procédé selon l'une des revendications précédentes, dans lequel lesdits premier et deuxième outils sont des outils dont la forme détermine la forme desdites pièces.

10. Procédé selon l'une des revendications précédentes, dans lequel, pour ledit premier ensemble dudit deuxième outil et/ou pour ledit deuxième ensemble dudit deuxième outil, les segments (2a ; 2b ; 20 ; 21) de l'ensemble respectif sont déplacés de telle façon que la pression sur ledit matériau (3) à comprimer exercée par l'un des segments (2a ; 2b ; 20; 21) dudit ensemble respectif est approximativement au moins identique pour chacun desdits segments (2a ; 2b ; 20 ; 21).

11. Procédé selon l'une des revendications précédentes, dans lequel au moins l'un desdits segments (2b; 21) dudit deuxième ensemble dudit deuxième outil est formé de façon à ce que, lors de la compression dudit matériau, des forces soient exercées par ledit segment (2b ; 21) sur au moins un segment (2a ; 20) dudit premier ensemble dudit deuxième outil.

12. Procédé selon l'une des revendications précédentes, dans lequel, lors de ladite compression, une pression d'au moins 5 bar et en particulier d'au plus 50 bar est exercée sur ledit matériau.

13. Procédé selon l'une des revendications précédentes, comprenant l'étape consistant à chauffer ledit matériau (3) avant et/ou pendant et/ou après ladite compression.

14. Procédé selon l'une des revendications précédentes, lequel est un procédé pour fabriquer des pièces sans soudure, essentiellement constituées de plastique renforcé par des fibres continues, en particulier dans lesquelles ledit plastique est un thermoplastique.
